# FASCICULE DE BREVET EUROPEEN

(11) **EP 3 736 743 B1**
(45) Date de publication et mention de la délivrance du brevet: **16.04.2025**
(21) Numéro de dépôt: 20172818.5
(22) Date de dépôt: 04.05.2020
(51) Int. Cl.: G06N 3/04, G06N 3/08, G06N 5/00, G06F 21/55

(54) **PROCÉDÉ DE CONCEPTION D'UN GÉNÉRATEUR DE SIGNATURE D'UNE ENTITÉ RÉALISANT DES ACTIONS DANS UNE ARCHITECTURE INFORMATIQUE, PROCÉDÉ DE DÉTECTION DE COMPORTEMENT ANORMAL, PROGRAMME D'ORDINATEUR ET SYSTÈME CORRESPONDANTS**
ENTWURFVERFAHREN EINES SIGNATURGENERATORS EINER EINHEIT, DIE AKTIONEN IN EINER IT-ARCHITEKTUR DURCHFÜHRT, ENTSPRECHENDES ERKENNUNGSVERFAHREN VON ANORMALEM VERHALTEN, COMPUTERPROGRAMM UND SYSTEM
METHOD FOR DESIGNING A SIGNATURE GENERATOR OF AN ENTITY PERFORMING ACTIONS IN A COMPUTER ARCHITECTURE, METHOD FOR DETECTING ABNORMAL BEHAVIOUR, CORRESPONDING COMPUTER PROGRAM AND SYSTEM.

(30) Priorité: 06.05.2019 FR 1904728
(43) Date de publication de la demande: 11.11.2020
(73) Titulaire: BULL SAS, 78340 Les Clayes Sous Bois (FR)
(72) Inventeur: BESSE, Adrien, 78000 Versailles (FR); BOUZONNET, Loris, 38160 Chatte (FR); MORIN, Guillaume, 38000 Grenoble (FR); WINCKLER, Nicolas, 38000 Grenoble (FR)
(74) Mandataire: IPAZ

(56) Documents cités:
- US-A1- 2018 176 243
- WANG JUNQIAN ET AL: "Multi-task Network Learning Representation Features of Attributes and Identity for Person Re-identification", 9 August 2018, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 689 - 699, ISBN: 978-3-642-17318-9, XP047482140
- LU JIUMING ET AL: "Insider Threat Detection with Long Short-Term Memory", COMPUTATIONAL BIOLOGY AND BIOINFORMATICS, ACM, 2 PENN PLAZA, SUITE 701NEW YORKNY10121-0701USA, 29 January 2019 (2019-01-29), pages 1 - 10, XP059136264, ISBN: 978-1-4503-6552-9, DOI: 10.1145/3290688.3290692

## Description

La présente invention concerne un procédé de conception d'un générateur de signature d'une entité réalisant des actions dans une architecture informatique, un procédé de détection de comportement anormal, un programme d'ordinateur et un système correspondants. L'invention est exposée dans le jeu de revendications joint.

L'invention s'applique plus particulièrement à un procédé de conception d'un générateur de signature destiné à fournir une signature d'une entité à partir d'un jeu de caractéristiques statistiques d'actions datées de cette entité dans une infrastructure informatique, le procédé comportant :
- l'obtention d'une machine entraînable comportant au moins :
   -- un réseau de neurones amont destiné à fournir une signature d'une entité à partir d'un jeu de caractéristiques statistiques d'actions datées de cette entité dans une infrastructure informatique, et
   -- un classifieur destiné à fournir une prédiction d'entité à partir de la signature fournie par le réseau de neurones amont ;
- l'obtention de données d'entraînement comportant des jeux de caractéristiques statistiques d'actions datés, chacun associé à une entité ayant réalisée ces actions dans l'infrastructure informatique ; et
- l'entraînement supervisé de la machine entraînable à partir des données d'entraînement de sorte que la machine entraînable prédise correctement les entités associées aux jeux de caractéristiques statistiques des données d'entraînement.

US 2018/176243 A1 décrit un système de cybersécurité basé sur de l'apprentissage de représentations.

L'article de Tuor et al. intitulé « Predicting User Roles from Computer Logs Using Recurrent Neural Networks » et publié dans « Proceedings of the Thirty-First AAAI Conference on Artificial Intelligence (AAAI-17) », décrit un procédé de conception d'un prédicteur de rôle d'entité destiné à fournir une prédiction du rôle d'une entité à partir d'un jeu de caractéristiques statistiques d'actions datées de cette entité dans une infrastructure informatique, le procédé comportant :
- l'obtention d'une machine entraînable ;
- l'obtention de données d'entraînement comportant des jeux de caractéristiques statistiques d'actions datés d'entités dans l'infrastructure informatique, chaque jeu de caractéristiques statistiques étant associé à un rôle de l'entité ; et
- l'entraînement supervisé de la machine entraînable à partir des données d'entraînement de sorte que la machine entraînable prédise correctement les rôles associés aux jeux de caractéristiques des données d'entraînement.

Le fait de pouvoir prédire le rôle d'une entité permet de caractériser le comportement habituel de cette dernière. Cependant, cette caractérisation est très vague. En effet, plusieurs entités peuvent avoir le même rôle. En outre, même si un très grand nombre de rôles est prévu, ce nombre restera toujours très faible par rapport à toutes les possibilités comportementales. Ainsi, la connaissance du rôle d'une entité ne permet pas de définir précisément le comportement habituel d'une unité, en particulier pour déterminer lorsque le comportement de l'entité dévie sensiblement de ce comportement habituel. Dit autrement, la classification du rôle est une contrainte trop faible pour la caractérisation de comportements. Il est notamment impossible de discriminer des comportements associés au même rôle. Or, la détection d'une telle déviation peut permettre de détecter la présence d'une menace dans l'architecture informatique, comme la présence d'un logiciel malveillant ou bien un comportement répréhensible d'un utilisateur, tel que de l'espionnage industriel.

Il peut ainsi être souhaité de prévoir une caractérisation du comportement d'une entité qui permette de s'affranchir d'au moins une partie des problèmes et contraintes précités.

L'invention a donc pour objet un procédé de conception d'un générateur de signature destiné à fournir une signature d'une entité à partir d'un jeu de caractéristiques statistiques d'actions datées de cette entité dans une infrastructure informatique, le procédé comportant :
- l'obtention d'une machine entraînable comportant au moins :
   -- un réseau de neurones amont destiné à fournir une signature d'une entité à partir d'un jeu de caractéristiques statistiques d'actions datées de cette entité dans une infrastructure informatique, et
   -- un classifieur destiné à fournir une prédiction d'entité à partir de la signature fournie par le réseau de neurones amont ;
- l'obtention de données d'entraînement comportant des jeux de caractéristiques statistiques d'actions datés, chacun associé à une entité ayant réalisée ces actions dans l'infrastructure informatique ; et
- l'entraînement supervisé de la machine entraînable à partir des données d'entraînement de sorte que la machine entraînable prédise correctement les entités associées aux jeux de caractéristiques statistiques des données d'entraînement ;

le procédé étant caractérisé en ce que l'entraînement supervisé est en outre réalisé de sorte que la machine entraînable regroupe les signatures de chacune des entités associées aux jeux de caractéristiques statistiques des données d'entraînement autour d'un centre associé à cette entité,
et en ce qu'il comporte en outre :
   - la fourniture du générateur de signature comportant le réseau de neurones amont après entraînement.

Ainsi, grâce à l'invention, le générateur de signature est apte à générer une signature caractérisant de manière très fine le comportement de l'entité, ce qui permet de détecter une déviation comportementale même faible. En outre, les signatures des différentes entités sont suffisamment espacées les unes des autres, grâce à l'entraînement sur le regroupement des signatures, pour minimiser le risque de confondre une signature d'une entité ayant un comportement inhabituel avec une signature associée au comportement habituel d'une autre entité, et donc de ne pas détecter le comportement inhabituel de la première entité.

De façon optionnelle, le centre est un barycentre, par exemple un isobarycentre, des signatures de l'entité à laquelle ce centre est associé.

De façon optionnelle également, l'entraînement supervisé utilise une fonction de perte totale utilisant une première fonction de perte associée à la prédiction d'entité et une deuxième fonction de perte associée au regroupement des signatures.

De façon optionnelle également, la fonction de perte totale utilise une combinaison linéaire des première et deuxième fonctions de perte.

De façon optionnelle également, la combinaison linaire présente un coefficient pour au moins une parmi les première et deuxième fonctions de perte, ce coefficient étant un hyperparamètre, et le procédé comporte :
- l'entraînement supervisé de la machine entraînable à partir des données d'entraînement pour plusieurs jeux d'hyperparamètres ;
- pour chaque jeu d'hyperparamètres, l'analyse des signatures obtenues pour produire une évaluation de performance ; et
- la sélection des hyperparamètres donnant la meilleure évaluation de performance.

De façon optionnelle également, la machine entraînable comporte un réseau de neurones global comportant N couches de neurones, le réseau de neurones amont comportant les N - k premières couches et le classifieur comportant les k dernières couches, k étant supérieur ou égal à un.

De façon optionnelle également, l'entraînement supervisé est en outre réalisé de sorte que la machine entraînable réalise une ou plusieurs autres tâches.

Il est également proposé un procédé de détection de comportement anormal d'une entité comportant :
- la fourniture d'au moins un jeu de caractéristiques statistiques d'actions datées de l'entité dans une infrastructure informatique à un générateur de signature conçu d'après un procédé selon l'invention ;
- la fourniture par le générateur de signature d'une signature de l'entité pour chaque jeu de caractéristiques statistiques ;
- la comparaison d'une donnée issue de la ou des signatures fournies par le générateur de signature avec au moins une donnée de référence ; et
- la détection d'un comportement normal ou anormal de l'entité à partir de la comparaison.

Il est également proposé un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé selon l'invention, lorsque ledit programme est exécuté sur un ordinateur.

Il est également proposé un système de conception d'un générateur de signature destiné à fournir une signature d'une entité à partir d'un jeu de caractéristiques statistiques d'actions datées de cette entité dans une infrastructure informatique, comportant :
- une machine entraînable comportant au moins :
   -- un réseau de neurones amont destiné à fournir une signature d'une entité à partir d'un jeu de caractéristiques statistiques d'actions datées de cette entité dans une infrastructure informatique, et
   -- un classifieur destiné à fournir une prédiction d'entité à partir de la signature fournie par le réseau de neurones amont ;
- un dispositif d'entraînement conçu pour entraîner de manière supervisée la machine entraînable à partir de données d'entraînement comportant des jeux de caractéristiques statistiques d'actions datés, chacun associé à une entité ayant réalisée ces actions dans l'infrastructure informatique, de sorte que la machine entraînable prédise correctement les entités associées aux jeux de caractéristiques statistiques des données d'entraînement ;
le système étant caractérisé en ce que le dispositif d'entraînement est en outre conçu pour entraîner la machine entraînable de sorte que la machine entraînable regroupe les signatures de chacune des entités associées aux jeux de caractéristiques statistiques des données d'entraînement autour d'un centre associé à cette entité, et en ce que le générateur de signature comporte le réseau de neurones amont après entraînement

L'invention sera mieux comprise à l'aide de la description qui va suivre, donnée uniquement à titre d'exemple et faite en se référant aux dessins annexés dans lesquels :
[Fig.1] la figure 1 représente schématiquement la structure générale d'une infrastructure informatique, de moyens de surveillance et de moyens d'extraction de caractéristiques statistiques, selon un mode de réalisation de l'invention,
[Fig.2] la figure 2 représente schématiquement la structure générale d'un système de conception d'un générateur de signature d'entité, selon un mode de réalisation de l'invention,
[Fig.3] la figure 3 illustre les étapes successives d'un procédé de conception d'un générateur de signature d'entité, selon un mode de réalisation de l'invention,
[Fig.4] la figure 4 représente schématiquement la structure générale d'un système de détection de comportement anormal d'une entité, selon un mode de réalisation de l'invention, et
[Fig.5] la figure 5 illustre les étapes successives d'un procédé de détection de comportement anormal d'une entité, selon un mode de réalisation de l'invention.

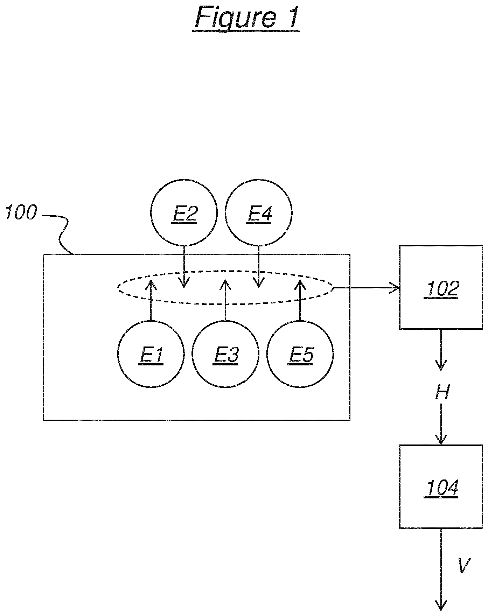

La figure 1 illustre une infrastructure informatique 100 pouvant comporter par exemple un grand nombre d'ordinateurs reliés entre eux en réseau.

Des entités (cinq dans l'exemple décrit, portant respectivement les références E1, E2, E3, E4, E5) utilisent cette infrastructure informatique 100. Chaque entité peut être un élément interne de l'infrastructure informatique 100 (cas des entités E1, E3, E5), par exemple un programme d'ordinateur ou bien un ordinateur de l'infrastructure informatique 100, ou bien un élément externe de l'infrastructure informatique 100 (cas des entités E2, E4), par exemple un utilisateur (humain) ou bien un dispositif informatique connecté à l'infrastructure informatique 100. Ainsi, chaque entité E1, E2, E3, E4, E5 réalise, au cours du temps, différentes actions dans l'infrastructure informatique 100, ces actions étant représentées sur la figure 1 par des flèches.

Par ailleurs, dans l'exemple décrit, chaque entité E1, E2, E3, E4, E5 est associée à un groupe. Chaque groupe comporte donc une ou plusieurs des entités E1, E2, E3, E4, E5. Par exemple, un premier groupe comporte les entités E1 et E2, tandis qu'un deuxième groupe comporte les entités E3, E4, E5.

Pour surveiller les actions des entités E1, E2, E3, E4, E5, des moyens de surveillance 102 sont prévus. Les moyens de surveillance 102 sont conçus pour surveiller les entités E1, E2, E3, E4, E5 et pour fournir un historique H d'actions qu'elles réalisent dans l'infrastructure informatique 100 pendant un intervalle de surveillance de durée W₀. L'historique H associe chaque action à l'entité ayant réalisée cette action et à la date (au sens de date et heure) de cette action. Un exemple d'historique H est illustré dans le tableau suivant.

**[Tableau 1]**

| Action | Entité | Date |
|---|---|---|
| Action A1 | E3 | Jour 1 (lundi), 8h56 |
| Action A1 | E3 | Jour 1 (lundi), 9h37 |
| Action A2 | E1 | Jour 1 (lundi), 15h13 |
| Action A1 | E3 | Jour 2 (mardi), 10h23 |
| Action A2 | E3 | Jour 2 (mardi), 12h01 |
| Action A3 | E2 | Jour 2 (mardi), 18h22 |
| Action A2 | E2 | Jour 2, (mardi), 23h06 |
| Action A1 | E1 | Jour 3 (mercredi), 11h00 |
| Action A3 | E2 | Jour 3, (mercredi), 11h04 |
| Action A1 | E3 | Jour 4 (jeudi), 9h07 |
| Action A2 | E3 | Jour 4 (jeudi), 12h57 |
| Action A3 | E1 | Jour 4 (jeudi), 13h04 |
| Action A2 | E3 | Jour 4 (jeudi), 17h38 |
| ... | ... | ... |

L'historique H peut en outre indiquer d'autres informations pour certaines actions. Par exemple, une action peut correspondre à l'envoi d'un courriel et être associée, en plus de la date d'envoi (correspondant à la date de l'action), à l'objet du courriel, le ou les destinataires, l'expéditeur, le nombre de pièces jointes et leurs noms.

Des moyens 104 d'extraction de caractéristiques statistiques sont en outre prévus. Les moyens d'extraction 104 sont conçus, pour chaque entité E1, E2, E3, E4, E5 et pour chacun d'une pluralité d'intervalles de temps, appelés intervalles d'extraction, contenus dans l'intervalle de surveillance, pour calculer un nombre prédéfini de caractéristiques statistiques d'actions de cette entité listées dans l'historique H et s'étant produites pendant l'intervalle d'extraction considéré. Ainsi, les moyens d'extraction 104 fournissent, pour chaque entité E1, E2, E3, E4, E5, autant de jeux de caractéristiques statistiques que d'intervalles d'extraction.

Les caractéristiques statistiques sont par exemple calculées à partir de règles de calcul respectives prédéfinies.

Sur la figure 1, la référence V représente un jeu de caractéristiques statistiques fourni par les moyens d'extraction 104.

Chaque jeu de caractéristiques statistiques est par exemple sous la forme d'un vecteur dont les composantes sont respectivement formées par les caractéristiques statistiques.

De préférence, les intervalles d'extraction ne se chevauchent pas, sont adjacents, présentent une même durée W et sont les mêmes pour toutes les entités E1, E2, E3, E4, E5. Dans l'exemple décrit, la durée W₀ de l'intervalle de surveillance vaut douze jours, numérotés par la suite de 1 à 12, et la durée W des intervalles d'extraction est égale à un jour. Ainsi, dans l'exemple décrit, les moyens d'extraction 104 fournissent, pour chacune des entités E1, E2, E3, E4, E5, douze jeux de caractéristiques statistiques, correspondant respectivement aux douze jours de l'intervalle de surveillance.

Par la suite, l'ensemble des jeux de caractéristiques d'une entité provenant d'intervalles d'extraction consécutifs sera appelé une séquence de jeux de caractéristiques statistiques. Ainsi, dans l'exemple décrit, les moyens d'extraction 104 fournissent, pour chacune des entités E1, E2, E3, E4, E5, une séquence de douze jeux de caractéristiques statistiques.

Une caractéristique statistique est par exemple : le nombre d'occurrences moyen d'une action par unité de temps ; la date de la première activité (utile par exemple pour repérer un changement dans la ponctualité) ; l'agrégation sous forme de comptage, de valeur moyenne ou d'autres moments statistiques d'ordres supérieurs apportant des informations pertinentes sur la distribution sous-jacente (variance, Kurtosis, Skewness, etc.). Dans certains cas une caractéristique statistique peut être issue de la distance entre la distribution sur le passé de la variable avec la nouvelle distribution (quantifiées via des mesures de similarité entre distributions telle que la divergence de Kullback-Leibler par exemple). D'autres caractéristiques statistiques peuvent être issues de la covariance entre deux variables d'activités sur un intervalle de temps (permettant ainsi d'accéder à des informations statistiques plus fines qui n'auraient pas pu être capturées par des informations statistiques sur chacune des variables indépendamment).

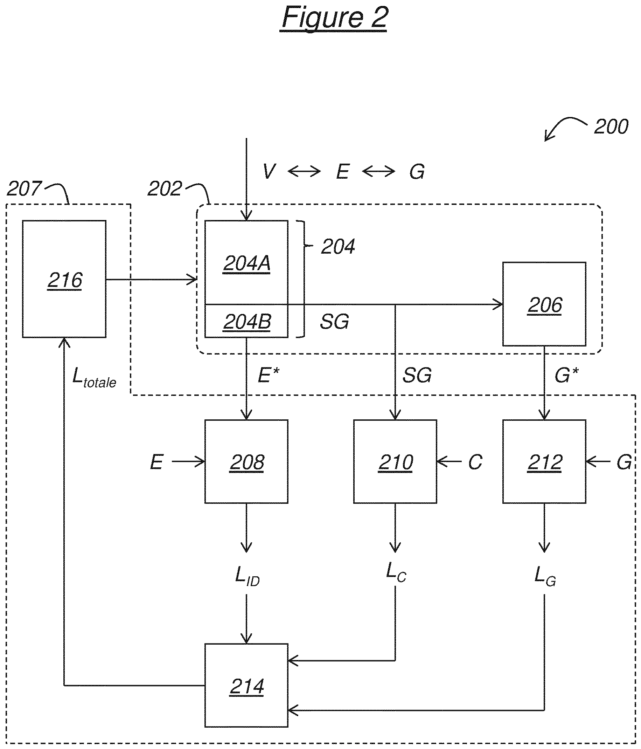

La figure 2 illustre un système 200 de conception d'un générateur de signature.

Le système de conception 200 comporte tout d'abord une machine entraînable 202 présentant des hyperparamètres, ainsi que des paramètres destinés à être déterminés par apprentissage une fois un jeu d'hyperparamètres choisi. La machine entraînable 202 comporte au moins un réseau de neurones amont 204A et un classifieur aval 204B.

Le réseau de neurones amont 204A est destiné à fournir une signature SG d'une entité E à partir d'un jeu de caractéristiques statistiques (tel que les jeux de caractéristiques fournis par les moyens d'extraction 104) d'actions datées de cette entité. Pour l'entraînement de la machine entraînable 202, le jeu de caractéristiques statistiques V est associé à l'entité E ayant réalisée ces actions, cette entité E étant elle-même associée, dans l'exemple décrit, à un groupe G.

Le classifieur aval 204B est destiné à fournir une prédiction d'entité E* à partir de la signature SG fournie par le réseau de neurones amont 204A.

Par exemple, la machine entraînable 202 comporte un réseau de neurones 204, par exemple un réseau de neurones profond, comportant N couches de neurones. Le réseau de neurones amont 204A comporte alors les N-k premières couches et le classifieur aval 204B comporte les k dernières couches, k étant un entier supérieur ou égal à un. k vaut par exemple un.

Par « réseau de neurones » on entend une structure complexe formée d'une pluralité de couches, chaque couche comportant une pluralité de neurones artificiels. Un neurone artificiel est un processeur élémentaire, qui calcule une sortie unique sur la base des informations qu'il reçoit. Chaque neurone d'une couche est relié à au moins un neurone d'une couche voisine via une synapse artificielle à laquelle est affectée un coefficient synaptique ou poids, mis à jour pendant un entraînement du réseau de neurones. C'est lors de cette étape d'entraînement que le poids de chaque synapse artificielle va être déterminé à partir de données d'entraînement.

Le réseau de neurones 204 est par exemple un réseau de neurones récurrent à mémoire court et long terme (ou LSTM, de l'anglais « Long Short Term Memory ») ou bien un réseau de neurones perceptron multi-couche (ou MLP, de l'anglais « Multi Layer Perceptron »). Un hyperparamètre peut être utilisé pour sélectionner la structure du réseau de neurones 204, par exemple le nombre de couches de neurones du réseau de neurones.

La dernière couche du réseau de neurones amont 204A (c'est-à-dire la N-k ième couche du réseau de neurones 204) présente S neurones, de sorte que la signature SG est composée des sorties de ces S neurones. Ainsi, la signature SG comporte S logits. Un « Logit » est le résultat de l'activation d'un neurone, en l'occurrence de la N-k ième couche.

La machine entraînable 202 est destinée à être entraînée de manière supervisée pour réaliser plusieurs tâches simultanément (technique dite, en anglais, du « multi-task learning »). Ces tâches comportent au moins les deux tâches suivantes, appelées tâches principales.

La première tâche principale est de prédire correctement l'entité associée au jeu de caractéristiques statistiques V fourni en entrée. Cette prédiction d'entité est notée E*. Cette première tâche principale sera appelée par la suite « tâche de prédiction d'entité ».

La deuxième tâche principale est de regrouper, dans l'espace des composantes des signatures, les signatures d'une même entité autour d'un centre associé à cette entité. Ce centre est par exemple un barycentre, tel que l'isobarycentre, des signatures de l'entité. Cette deuxième tâche principale sera appelée par la suite « tâche de regroupement des signatures ».

Les tâches réalisées par la machine entraînable 202 peuvent en outre comporter N autres tâches, appelées « tâches métier », relatives à un aspect pertinent pour le métier. Pour chacune de ces tâches métier, la machine entraînable 202 peut comporter un ou plusieurs éléments supplémentaires fournissant des données sur lesquelles l'entraînement est réalisé, à partir de données fournies par le réseau de neurones amont 204A (par exemple l'une des couches, par exemple celle donnant la signature SG).

Les tâches métier peuvent consister à prédire des variables catégoriques ou numériques. Un exemple de tâche métier catégorique peut être la classification d'une variable 'Web' relevant d'une activité de connexion pouvant prendre les valeurs suivantes : 1. Aucun, 2. Occasionnel, 3. Fréquent. Un exemple de tâche métier numérique peut être la prédiction de la fréquence de connexion journalière à des machines.

Dans l'exemple décrit, une seule tâche métier est utilisée. Cette tâche métier est de prédire correctement le groupe G auquel appartient l'entité dont la signature S est fournie par le réseau de neurones amont 204A. Cette prédiction de groupe est notée G*. Ainsi, la machine entraînable 202 comporte en outre un élément prédicteur de groupe 206 conçu pour fournir, à partir de la signature SG, une prédiction G* du groupe auquel appartient l'entité associée au jeu de caractéristiques statistiques V fourni en entrée. Cette tâche métier sera appelée par la suite « tâche de prédiction de groupe ».

L'élément 206 comporte par exemple un réseau de neurones destiné à être entraîné en même temps que le réseau de neurones 204.

Ainsi, au total, la machine entraînable 202 est destinée à être entraînée de manière supervisée pour réaliser N + 2 tâches simultanément (N entier supérieur ou égal à 0).

Pour réaliser cet entraînement, un dispositif d'entraînement 207 est prévu.

Ce dispositif d'entraînement 207 comporte, pour chaque tâche, un module conçu pour calculer une fonction de perte, dite fonction de perte spécifique, associée à cette tâche.

Ainsi, le dispositif d'entraînement 207 comporte tout d'abord un premier module 208 de calcul d'une fonction de perte spécifique L_{ID} associée à la tâche de prédiction d'entité. La fonction de perte spécifique L_{ID} est par exemple représentative d'une distance entre les identifiants ID et les prédictions ID*, par exemple entre les distributions des vrais identifiants et des identifiants prédits. Dans l'exemple décrit, la fonction de perte spécifique L_{ID} est la fonction de perte dite « d'entropie croisée » (de l'anglais « cross-entropy »).

Le dispositif d'entraînement 207 comporte en outre un deuxième module 210 de calcul d'une fonction de perte spécifique L_{C} associée à la tâche de regroupement des signatures. Par exemple, la fonction de perte spécifique L_{C} utilise, pour chaque entité, une distance (dans l'espace des S composantes des signatures SG) entre les signatures de cette entité et un centre associé à cette entité, tel que l'isobarycentre de ces signatures. Ainsi, la fonction de perte spécifique L_{C} est représentative de ces distances. Dans l'exemple décrit, la fonction de perte spécifique L_{C} est la fonction de perte dite de « perte de centre » (« center loss » en anglais) décrite dans l'article de Wen, Y., Zhang, K., Li, Z., Qiao, Y., intitulé « A discriminative feature learning approach for deep face recognition. » et publié dans Computer Vision - ECCV 2016 - 14th European Conference, Amsterdam, The Netherlands, October 11-14, 2016, Proceedings, Part VII. (2016) 499-515.

Le dispositif d'entraînement 207 comporte en outre un troisième module 212 de calcul d'une fonction de perte spécifique L_{G} associée à la tâche de prédiction de groupe. La fonction de perte spécifique L_{G} est représentative d'une distance entre les prédictions de groupe G* et les groupes G, par exemple entre les distributions des vrais groupes et des groupes prédits. De manière générale, pour les tâches métier, la fonction de perte « cross-entropy » est par exemple utilisée pour chaque tâche métier dont les valeurs sont catégoriques, tandis que la fonction de perte dite « d'erreur quadratique moyenne » (« mean squared error » en anglais) est par exemple utilisée pour les tâches métier dont les valeurs sont numériques. Dans l'exemple décrit, la tâche métier est la prédiction de groupe, ce qui est donc une tâche métier dont les valeurs sont catégoriques, de sorte que la fonction de perte « cross-entropy » est choisie pour la fonction de perte spécifique L_{G}.

En outre, le dispositif d'entraînement 207 comporte un quatrième module 214 de calcul d'une fonction de perte totale Lₜₒₜₐₗₑ à partir des fonctions de perte spécifiques L_{ID}, L_{C}, et L_{G}. Dans l'exemple décrit, la fonction de perte totale Lₜₒₜₐₗₑ comporte une combinaison linéaire des fonctions de perte spécifiques. La fonction de perte totale Lₜₒₜₐₗₑ est par exemple donnée par : Lₜₒₜₐₗₑ = L_{ID} + αL_{C} + λL_{G} + γL_{REG}, où les coefficients α, λ et γ sont des hyperparamètres et où L_{REG} est un terme de perte ajouté pour régulariser le modèle pendant l'entraînement. L_{REG} est un terme n'étant fonction que des paramètres du modèle et contraignant le modèle à rester dans un certain espace de solutions. Un exemple de terme de régularisation est la norme L2 (appelée « weight decay » dans la littérature) sur les paramètres des couches du réseau de neurones poussant tous les poids vers 0 lorsque ce terme de régularisation est minimisé via la minimisation de la fonction de perte totale Lₜₒₜₐₗₑ.

Le dispositif d'entraînement 207 comporte en outre un module 216 de mise à jour de paramètres de la machine entraînable 202 à partir de la fonction de perte totale Lₜₒₜₐₗₑ. Ces paramètres comportent en particulier les poids synaptiques du ou des réseaux de neurones (les réseaux de neurones 204 et 206 dans l'exemple décrit) de la machine entraînable 202.

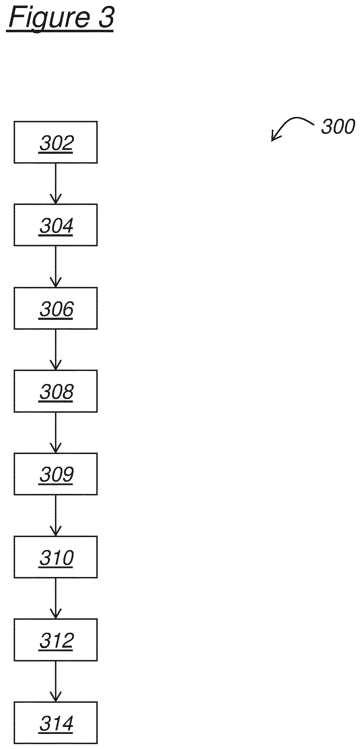

En référence à la figure 3, un procédé 300 de conception d'un générateur de signature va à présent être décrit.

Au cours d'une étape 302, les moyens de surveillance 102 surveillent les actions des entités E1, E2, E3, E4, E5 pendant un intervalle de temps de surveillance de durée W₀ et enregistrent leurs actions dans l'historique H. La durée W₀ vaut, dans l'exemple décrit, douze jours numérotées par la suite de un à douze.

Au cours d'une étape 304, la durée W est choisie. Dans l'exemple décrit, la durée W vaut un jour.

Au cours d'une étape 306, des données d'entraînement et des premières et deuxièmes données de validation sont obtenues.

Pour cela, à partir de l'historique H, les moyens d'extraction 104 calculent, pour chaque entité E1, E2, E3, E4, E5 et pour chaque intervalle d'extraction, un jeu de caractéristiques statistiques des actions de cette entité E1, E2, E3, E4, E5 pendant l'intervalle d'extraction considéré. Dans l'exemple décrit, ces intervalles de temps présentent la durée W, soit un jour.

Ainsi, pour l'entité E1, les moyens d'extraction 104 calculent un jeu de caractéristiques statistiques pour chacun des jours 1 à 12. Des calculs similaires sont réalisés pour les autres entités E2, E3, E4, E5, de manière à obtenir douze jeux de caractéristiques pour chaque entité E1, E2, E3, E4, E5.

Une première partie de jeux de caractéristiques successifs d'une première partie des entités est sélectionnée pour former les données d'entraînement. Une deuxième partie de jeux de caractéristiques successifs de cette première partie des entités est sélectionnée pour former les premières données de validation. Dans l'exemple décrit, les jeux de caractéristiques des entités E1, E2, E3 des jours 1 à 9 sont sélectionnés comme données d'entraînement et les jeux de caractéristiques des entités E1, E2, E3 des jours 10 à 12 sont sélectionnées comme premières données de validation.

En outre, des jeux de caractéristiques successifs des autres entités sont sélectionnés comme deuxièmes données de validation. Dans l'exemple décrit, les jeux de caractéristiques des entités E4, E5 des jours 1 à 12 sont sélectionnés comme deuxièmes données de validation.

Au cours d'une étape 308, des valeurs pour les hyperparamètres sont choisies, par exemple une structure du réseau de neurones 204 parmi plusieurs prédéfinies et des valeurs des coefficients α, λ et γ sont choisis.

Au cours d'une étape 309, la machine entraînable 202 de la figure 2 est obtenue.

Au cours d'une étape 310, la machine entraînable 202 est entraînée de manière supervisée à partir des données d'entraînement pour réaliser les différentes tâches prévues, à savoir dans l'exemple décrit : la prédiction d'entité, le regroupement des signatures et, le cas échéant, la réalisation de la ou des tâches métier.

Pour cela, dans l'exemple décrit, les étapes suivantes sont réalisées. Les jeux de caractéristiques statistiques des données d'entraînement sont fournis les uns après les autres à la machine entraînable 202. Pour chaque jeu de caractéristiques statistique fourni V, le réseau de neurones amont 204A génère une signature SG, le classifieur aval 204B fournit une prédiction d'entité E* à partir de la signature SG et le module 212 fournit une prédiction de groupe G* à partir de la signature SG. À partir des signatures SG, des prédictions d'entité E* et des prédictions de groupe G* obtenues des premières données d'entraînement, les modules 208, 210, 212 calculent respectivement les fonctions de perte L_{ID}, L_{C}, L_{G} et le module 216 calcule la fonction de perte totale Lₜₒₜₐₗₑ pour les données d'entraînement. Le module de mise à jour 216 modifie alors les paramètres de la machine entraînable 202 en fonction de la fonction de perte globale Lₜₒₜₐₗₑ, dans le but de diminuer cette dernière. Les étapes précédentes sont alors répétées, par exemple jusqu'à ce que la fonction de perte totale Lₜₒₜₐₗₑ n'évolue plus beaucoup (par exemple, jusqu'à ce que l'amélioration de la fonction de perte totale Lₜₒₜₐₗₑ passe sous un seuil prédéfini).

Ainsi, la fonction de perte L_{ID} guide l'entraînement pour prédire l'entité, c'est-à-dire classifier les jeux de caractéristiques statistiques d'entrée entre U classes, correspondant aux U entités des premières données d'entraînement.

La fonction de perte L_{C} guide l'entraînement pour regrouper les signatures d'une même entité, et de ce fait réduire la variation intra-classe.

Au cours d'une étape 312, le réseau de neurones amont 204A est validé au moyen des premières et deuxièmes données de validation.

Pour cela, dans l'exemple décrit, les jeux de caractéristiques statistiques des premières et deuxièmes données de validation sont utilisés. Plus précisément, les étapes suivantes sont réalisées. Les jeux de caractéristiques des premières et deuxièmes données de validation sont fournis les uns après les autres au réseau de neurones amont 204A qui génère à chaque fois une signature SG. Les signatures obtenues sont alors analysées pour produire une évaluation de performance du réseau de neurones amont 204A.

Les étapes 310 et 312 peuvent être réitérées avec d'autres hyperparamètres, en particulier avec d'autres valeurs pour les coefficients α, λ et γ. Dans ce cas, les hyperparamètres donnant la meilleure évaluation de performance à l'étape 312 sont sélectionnés.

Au cours d'une étape 314, le réseau de neurones amont 204A est fourni en tant que générateur de signature (désigné par la suite par la même référence 204A).

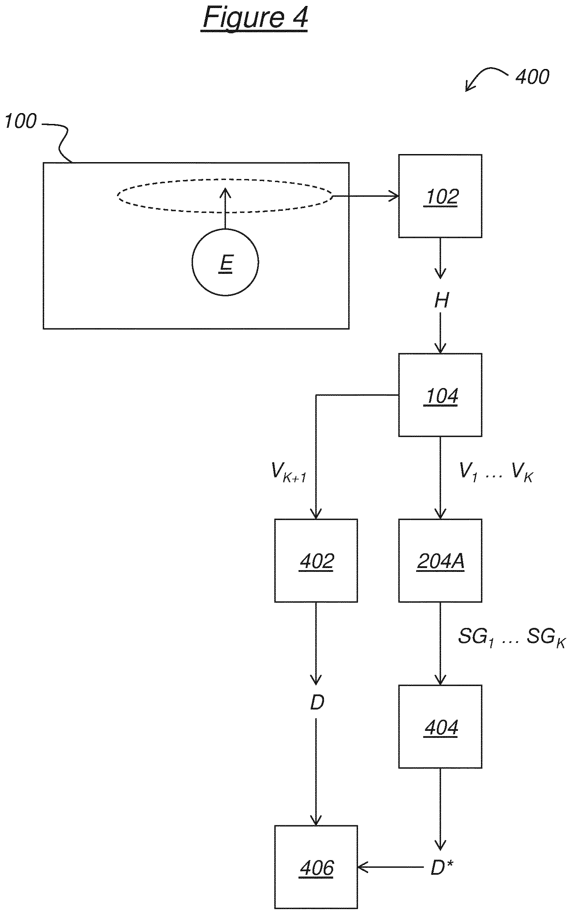

En référence à la figure 4, un système 400 de détection de comportement anormal d'une entité va à présent être décrit.

Le système de détection 400 comporte tout d'abord l'infrastructure informatique 100, les moyens de surveillance 102 et les moyens d'extraction 104. Il comporte en outre le générateur de signature 204A obtenu par exemple par le procédé de la figure 3.

Le système de détection 400 comporte en outre des moyens 402 de détermination de données d'activité, des moyens 404 de prédiction de données d'activité et des moyens 406 de détection d'anomalie.

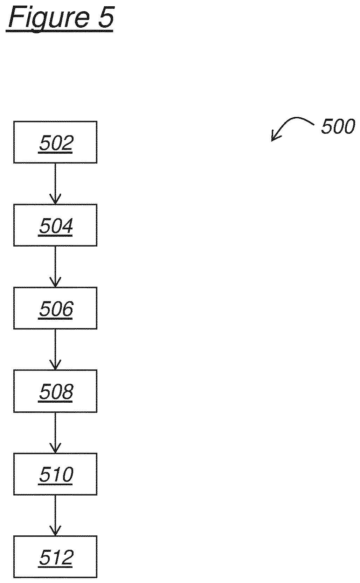

En référence à la figure 5, un procédé 500 de détection de comportement anormal d'une entité va à présent être décrit.

Au cours d'une étape 502, les moyens de surveillance 102 surveillent au moins une entité E (l'une des entités E1, E2, E3, E4, E5 ou bien une autre entité) sur un intervalle de surveillance pour fournir un historique H d'actions réalisées par chaque entité surveillée E dans l'infrastructure informatique 100.

Au cours d'une étape 504, les moyens d'extraction 104 fournissent, à partir de l'historique H, pour chaque entité surveillée E, une séquence de K+1 jeux de caractéristiques statistiques V₁... V_{K}, V_{K+1}, K étant un entier supérieur ou égal à un.

Au cours d'une étape 506, pour chaque entité surveillée E, les moyens 402 déterminent des données d'activité D à partir du dernier jeu de caractéristiques statistiques V_{K+1} de la séquence.

Au cours d'une étape 508, pour chaque entité surveillée E, les K premiers jeux de caractéristiques statistiques V₁...V_{K} de la séquence sont fournis au générateur de signature 204A (après l'entraînement de la figure 3) qui fournit en réponse autant de signatures SG₁...SG_{K} de l'entité surveillée E.

Au cours d'une étape 510, les moyens de prédiction 404 fournissent une prédiction de données d'activité D* à partir des signatures SG₁...SG_{K}. Pour cela, les moyens de prédiction 404 comportent un réseau de neurones préalablement entraîné de manière supervisée pour prédire les données d'activité du dernier jeu de caractéristiques statistiques d'une séquence de K+1 jeux de caractéristiques statistiques, à partir des K premiers jeux de caractéristiques statistiques de cette séquence. Pour l'entraînement, des séquences de jeux de caractéristiques sont utilisées en entrée des moyens 402 et du générateur de signature 204A, ce dernier restant inchangé (c'est-à-dire n'étant pas entraîné) pendant l'entraînement des moyens 404. N'importe quelles séquences de jeux de caractéristiques peuvent être utilisées pour l'entraînement (en particulier celles d'entité différentes de celles utilisées pour l'entraînement du générateur de signature 204A), à l'exception, de préférence, de séquences comportant des jeux de caractéristiques statistiques ayant servi à l'entraînement du générateur de signature 204A.

Au cours d'une étape 512, les moyens de détection d'anomalie 406 comparent les données d'activité D avec une donnée de référence, leur prédiction D* dans l'exemple décrit, et détectent une anomalie, c'est-à-dire un comportement anormal, ou bien une absence d'anomalie (c'est-à-dire un comportement normal) à partir de la comparaison.

Il apparaît clairement qu'un procédé de conception de générateur de signature tel que celui décrit précédemment permet d'obtenir un générateur de signature fournissant des signatures précises et pouvant être utilisées pour détecter un comportement anormal (inhabituel) d'une entité.

Il sera en outre apprécié que chacun des éléments 102, 104, 202, 204A, 204B, 206, 207, 208, 210, 212, 214, 216, 402, 404, 406 décrits précédemment peut être implémenté de manière matérielle, par exemple par des fonctions micro programmées ou micro câblées dans des circuits intégrés dédiés (sans programme d'ordinateur), et/ou de manière logicielle, par exemple par un ou plusieurs programmes d'ordinateur destinés à être exécutés par un ou plusieurs ordinateurs comportant chacun, d'une part, une ou plusieurs mémoires pour le stockage de fichiers de données et d'un ou plusieurs de ces programmes d'ordinateurs et, d'autre part, un ou plusieurs processeurs associés cette ou ces mémoires et destinés à exécuter les instructions du ou des programmes d'ordinateur stockés dans la ou les mémoire de cet ordinateur.

## Revendications

1. Procédé (300) de conception d'un générateur de signature (204A) destiné à fournir une signature (SG) d'une entité (E) réalisant des actions dans une infrastructure informatique (100), cette signature (SG) étant fournie à partir d'un jeu de caractéristiques statistiques (V) d'actions datées de cette entité (E) dans l'infrastructure informatique (100), le procédé étant mis en œuvre par ordinateur et comportant :
- l'obtention (309) d'une machine entraînable (202) comportant au moins :
• un réseau de neurones amont (204A) destiné à fournir une signature (SG) d'une entité (E) à partir d'un jeu de caractéristiques statistiques (V) d'actions datées de cette entité (E) dans une infrastructure informatique (100), et
• un classifieur (204B) destiné à fournir une prédiction d'entité (E*) à partir de la signature (SG) fournie par le réseau de neurones amont (204A) ;
- l'obtention (306) de données d'entraînement comportant des jeux de caractéristiques statistiques (V) d'actions datés, chacun associé à une entité (E) ayant réalisé ces actions dans l'infrastructure informatique (100), les données d'entraînement comprenant une pluralité de jeux de caractéristiques statistiques (V) pour chaque entité (E) ;
- l'entraînement supervisé (310) de la machine entraînable (202) à partir des données d'entraînement de sorte que la machine entraînable (202) prédise correctement les entités (E) associées aux jeux de caractéristiques statistiques (V) des données d'entraînement par utilisation d'une première fonction de perte (L_{ID}) représentative d'une distance entre chaque prédiction d'entité (E*) et l'entité (E) associée ; et
- la fourniture (314) du générateur de signature (204A) comportant le réseau de neurones amont (204A) après entraînement ;
le procédé (300) étant **caractérisé en ce que** l'entraînement supervisé est en outre réalisé de sorte que la machine entraînable (202) regroupe les signatures (SG) de chacune des entités (E) associées aux jeux de caractéristiques statistiques (V) des données d'entraînement autour d'un centre associé à cette entité (E) par utilisation d'une deuxième fonction de perte (L_{C}) représentative pour chaque entité (E) d'une distance entre ses signatures (SG) et le centre qui lui est associé,
le procédé comprenant, en outre, une détection d'une menace dans cette infrastructure informatique (100) en utilisant la signature (SG) d'une entité (E) pour détecter un comportement anormal de ladite entité (E).

2. Procédé selon la revendication 1, dans lequel le centre est un barycentre, par exemple un isobarycentre, des signatures (SG) de l'entité (E) à laquelle ce centre est associé.

3. Procédé selon la revendication 1 ou 2, dans lequel l'entraînement supervisé minimise une fonction de perte totale (Lₜₒₜₐₗₑ) utilisant la première fonction de perte (L_{ID}) associée à la prédiction d'entité et la deuxième fonction de perte (L_{C}) associée au regroupement des signatures (SG).

4. Procédé selon la revendication 3, dans lequel la fonction de perte totale (Lₜₒₜₐₗₑ) utilise une combinaison linéaire des première et deuxième fonctions de perte (L_{ID}, L_{C}).

5. Procédé selon la revendication 4, dans lequel la combinaison linaire présente un coefficient pour au moins une parmi les première et deuxième fonctions de perte (L_{ID}, L_{C}), ce coefficient étant un hyperparamètre, et comportant :
- l'entraînement supervisé (310) de la machine entraînable (202) à partir des données d'entraînement pour plusieurs jeux d'hyperparamètres ;
- pour chaque jeu d'hyperparamètres, l'analyse des signatures obtenues pour produire une évaluation de performance ; et
- la sélection des hyperparamètres donnant la meilleure évaluation de performance.

6. Procédé selon l'une quelconque des revendications 1 à 5, dans lequel la machine entraînable (202) comporte un réseau de neurones global (204) comportant N couches de neurones, le réseau de neurones amont (204A) comportant les N - k premières couches et le classifieur (204B) comportant les k dernières couches, k étant supérieur ou égal à un.

7. Procédé selon l'une quelconque des revendications 1 à 6, dans lequel l'entraînement supervisé est en outre réalisé de sorte que la machine entraînable (202) réalise une ou plusieurs autres tâches.

8. Procédé (500) selon l'une quelconque des revendications 1 à 7, dans lequel la détection d'une menace comprend :
- la fourniture (506) d'au moins un jeu de caractéristiques statistiques (V₁... V_{K}) d'actions datées de l'entité (E) dans l'infrastructure informatique (100) au générateur de signature (204A) ;
- la fourniture (508) par le générateur de signature (204A) d'une signature (SG₁...SG_{K}) de l'entité (E) pour chaque jeu de caractéristiques statistiques (V₁... V_{K}) ;
- la comparaison (512) d'une donnée de référence (D*) issue de la ou des signatures (SG₁... SG_{N}) fournies par le générateur de signature (204A) avec au moins une donnée d'activité (D) ; et
- la détection d'une éventuelle menace dans l'infrastructure informatique (100) par la détection (512) d'un comportement normal ou anormal de l'entité (E) à partir de la comparaison.

9. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé selon l'une quelconque des revendications 1 à 8, lorsque ledit programme est exécuté sur un ordinateur.

10. Système (200) de conception d'un générateur de signature (204A) destiné à fournir une signature (SG) d'une entité (E) réalisant des actions dans une infrastructure informatique (100) pour la détection d'une menace dans cette infrastructure informatique (100), cette signature (SG) étant fournie à partir d'un jeu de caractéristiques statistiques (V) d'actions datées de cette entité (E) dans l'infrastructure informatique (100), comportant :
- une machine entraînable (202) comportant au moins :
• un réseau de neurones amont (204A) destiné à fournir une signature (SG) d'une entité (E) à partir d'un jeu de caractéristiques statistiques (V) d'actions datées de cette entité (E) dans une infrastructure informatique (100), et
• un classifieur (204B) destiné à fournir une prédiction d'entité (E*) à partir de la signature (SG) fournie par le réseau de neurones amont (204A) ;
- un dispositif d'entraînement (207) conçu pour entraîner de manière supervisée la machine entraînable (202) à partir de données d'entraînement comportant des jeux de caractéristiques statistiques (V) d'actions datés, chacun associé à une entité (E) ayant réalisé ces actions dans l'infrastructure informatique (100), les données d'entraînement comprenant une pluralité de jeux de caractéristiques statistiques (V) pour chaque entité (E), de sorte que la machine entraînable (202) prédise correctement les entités (E) associées aux jeux de caractéristiques statistiques (V) des données d'entraînement par utilisation d'une première fonction de perte (L_{ID}) représentative d'une distance entre chaque prédiction d'entité (E*) et l'entité (E) associée ;
le système (200) étant **caractérisé en ce que** le dispositif d'entraînement (207) est en outre conçu pour entraîner la machine entraînable (202) de sorte que la machine entraînable (202) regroupe les signatures (SG) de chacune des entités (E) associées aux jeux de caractéristiques statistiques (V) des données d'entraînement autour d'un centre associé à cette entité (E) par utilisation d'une deuxième fonction de perte (L_{C}) représentative pour chaque entité (E) d'une distance entre ses signatures (SG) et le centre qui lui est associé, et **en ce que** le générateur de signature (204A) comporte le réseau de neurones amont (204A) après entraînement,
le système (200) étant, en outre, configuré pour détecter une menace dans cette infrastructure informatique (100) en utilisant la signature (SG) d'une entité (E) pour détecter un comportement anormal de ladite entité (E).

## Patentansprüche

1. Verfahren (300) zum Entwerfen eines Signaturgenerators (204A), der dazu bestimmt ist, eine Signatur (SG) einer Entität (E) bereitzustellen, die Aktionen in einer IT-Infrastruktur (100) umsetzt, wobei diese Signatur (SG) aus einem Satz von statistischen Merkmalen (V) von datierten Aktionen dieser Entität (E) in der IT-Infrastruktur (100) bereitgestellt wird, wobei das Verfahren durch einen Computer implementiert wird und umfassend:
- das Erhalten (309) einer trainierbaren Maschine (202), mindestens umfassend:
• ein vorgeschaltetes neuronales Netz (204A), das dazu bestimmt ist, eine Signatur (SG) einer Entität (E) aus einem Satz von statistischen Merkmalen (V) von datierten Aktionen dieser Entität (E) in einer IT-Infrastruktur (100) bereitzustellen, und
• einen Klassifizierer (204B), der dazu bestimmt ist, eine Entitätsvorhersage (E*) aus der Signatur (SG) bereitzustellen, die durch das vorgeschaltete neuronale Netz (204A) bereitgestellt wird;
- das Erhalten (306) von Trainingsdaten, umfassend Sätze von statistischen Merkmalen (V) von datierten Aktionen, die jeweils einer Entität (E) zugeordnet sind, die diese Aktionen in der IT-Infrastruktur (100) umgesetzt hat, wobei die Trainingsdaten eine Vielzahl von Sätzen von statistischen Merkmalen (V) für jede Entität (E) einschließen;
- das überwachte Trainieren (310) der trainierbaren Maschine (202) aus den Trainingsdaten, sodass die trainierbare Maschine (202) die Entitäten (E), die den Sätzen von statistischen Merkmalen (V) der Trainingsdaten zugeordnet sind, korrekt vorhersagt, durch Verwendung einer ersten Verlustfunktion (L_{ID}), die für einen Abstand zwischen jeder Entitätsvorhersage (E*) und der zugeordneten Entität (E) repräsentativ ist; und
- das Bereitstellen (314) des Signaturgenerators (204A) umfassend das vorgeschaltete neuronale Netz (204A) nach dem Training;
wobei das Verfahren (300) **dadurch gekennzeichnet ist, dass** das überwachte Trainieren ferner so umgesetzt wird, dass die trainierbare Maschine (202) die Signaturen (SG) von jeder der Entitäten (E), die den Sätzen von statistischen Merkmalen (V) der Trainingsdaten zugeordnet sind, um ein dieser Entität (E) zugeordnetes Zentrum umgruppiert, durch Verwendung einer zweiten Verlustfunktion (L_{C}), die für jede Entität (E) für einen Abstand zwischen ihren Signaturen (SG) und dem ihr zugeordneten Zentrum repräsentativ ist,
wobei das Verfahren ferner ein Erkennen einer Bedrohung in dieser IT-Infrastruktur (100) durch Verwenden der Signatur (SG) einer Entität (E) zum Erkennen eines abnormalen Verhaltens der Entität (E) einschließt.

2. Verfahren nach Anspruch 1, wobei das Zentrum ein Baryzentrum, zum Beispiel ein Isobaryzentrum, der Signaturen (SG) der Entität (E) ist, der dieses Zentrum zugeordnet ist.

3. Verfahren nach Anspruch 1 oder 2, wobei das überwachte Trainieren eine Gesamtverlustfunktion (L_{gesamt}) unter Verwendung der ersten Verlustfunktion (L_{ID}), DIE der Entitätsvorhersage zugeordnet ist, und der zweiten Verlustfunktion (L_{C}), die der Umgruppierung der Signaturen (SG) zugeordnet ist, minimiert.

4. Verfahren nach Anspruch 3, wobei die Gesamtverlustfunktion (L_{gesamt}) eine lineare Kombination der ersten und der zweiten Verlustfunktion (L_{ID}, L_{C}) verwendet.

5. Verfahren nach Anspruch 4, wobei die lineare Kombination einen Koeffizienten für mindestens eine der ersten und der zweiten Verlustfunktion (L_{ID}, L_{C}) aufweist, wobei dieser Koeffizient ein Hyperparameter ist, und umfassend:
- das überwachte Trainieren (310) der trainierbaren Maschine (202) aus den Trainingsdaten für mehrere Sätze von Hyperparametern;
- für jeden Satz von Hyperparametern, das Analysieren der erhaltenen Signaturen zum Erstellen einer Leistungsbewertung; und
- das Auswählen der Hyperparameter, die die beste Leistungsbewertung ergeben.

6. Verfahren nach einem der Ansprüche 1 bis 5, wobei die trainierbare Maschine (202) ein globales neuronales Netz (204) umfasst, umfassend N Schichten von Neuronen, das vorgelagerte neuronale Netz (204A) umfassend die ersten N - k Schichten und den Klassifizierer (204B), umfassend die letzten k Schichten, wobei k größer als oder gleich eins ist.

7. Verfahren nach einem der Ansprüche 1 bis 6, wobei das überwachte Trainieren ferner umgesetzt wird, sodass die trainierbare Maschine (202) eine oder mehrere andere Aufgaben umsetzt.

8. Verfahren (500) nach einem der Ansprüche 1 bis 7, wobei das Erkennen einer Bedrohung einschließt:
- das Bereitstellen (506) mindestens eines Satzes von statistischen Merkmalen (V₁... V_{K}) von datierten Aktionen der Entität (E) in der IT-Infrastruktur (100) an den Signaturgenerator (204A);
- das Bereitstellen (508) durch den Signaturgenerator (204A) einer Signatur (SG₁...SG_{K}) der Entität (E) für jeden Satz von statistischen Merkmalen (V₁...V_{K});
- das Vergleichen (512) von einem Referenzdatum (D*), das aus der oder den Signaturen (SG₁...SG_{N}) STAMMT, die durch den Signaturgenerator (204A) mit mindestens einem Aktivitätsdatum (D) bereitgestellt werden; und
- das Erkennen einer möglichen Bedrohung in der IT-Infrastruktur (100) durch das Erkennen (512) eines normalen oder abnormalen Verhaltens der Entität (E) aus dem Vergleich.

9. Computerprogramm, das von einem Kommunikationsnetz herunterladbar ist und/oder auf einem Träger abgespeichert ist, der durch den Computer lesbar und/oder durch einen Prozessor ausführbar ist, **dadurch gekennzeichnet, dass** es Anweisungen für die Ausführung der Schritte eines Verfahrens nach einem der Ansprüche 1 bis 8 umfasst, wenn das Programm auf einem Computer des Systems ausgeführt wird.

10. System (200) für den Entwurf eines Signaturgenerators (204A), der dazu bestimmt ist, eine Signatur (SG) einer Entität (E) bereitzustellen, die Aktionen in einer IT-Infrastruktur (100) für die Erkennung einer Bedrohung dieser IT-Infrastruktur (100) umsetzt, wobei diese Signatur (SG) aus einem Satz von statistischen Merkmalen (V) von datierten Aktionen dieser Entität (E) in der IT-Infrastruktur (100) bereitgestellt wird, umfassend:
- eine trainierbare Maschine (202), mindestens umfassend:
• ein vorgeschaltetes neuronales Netz (204A), das dazu bestimmt ist, eine Signatur (SG) einer Entität (E) aus einem Satz von statistischen Merkmalen (V) von datierten Aktionen dieser Entität (E) in einer IT-Infrastruktur (100) bereitzustellen, und
• einen Klassifizierer (204B), der dazu bestimmt ist, eine Entitätsvorhersage (E*) aus der Signatur (SG) bereitzustellen, die durch das vorgeschaltete neuronale Netz (204A) bereitgestellt wird;
- eine Trainingsvorrichtung (207), die zum Trainieren der trainierbaren Maschine (202) auf überwachte Weise aus Trainingsdaten, umfassend Sätze von statistischen Merkmalen (V) von datierten Aktionen, die jeweils einer Entität (E) zugeordnet sind, die diese Aktionen in der IT-Infrastruktur (100) umgesetzt hat, konzipiert ist, wobei die Trainingsdaten eine Vielzahl von Sätzen von statistischen Merkmalen (V) für jede Entität (E) einschließen, sodass die trainierbare Maschine (202) die Entitäten (E), die den Sätzen von statistischen Merkmalen (V) der Trainingsdaten zugeordnet sind, korrekt vorhersagt, durch Verwendung einer ersten Verlustfunktion (L_{ID}), die für einen Abstand zwischen jeder Entitätsvorhersage (E*) und der zugeordneten Entität (E) repräsentativ ist;
das System (200) **dadurch gekennzeichnet ist, dass** die Trainingsvorrichtung (207) ferner zum Trainieren der trainierbaren Maschine (202) konzipiert ist, sodass die trainierbare Maschine (202) die Signaturen (SG) von jeder der Entitäten (E), die den Sätzen von statistischen Merkmalen (V) der Trainingsdaten zugeordnet sind, um ein dieser Entität (E) zugeordnetes Zentrum umgruppiert, durch Verwendung einer zweiten Verlustfunktion (L_{C}), die für jede Entität (E) eines Abstand zwischen ihren Signaturen (SG) und dem ihr zugeordneten Zentrum repräsentativ ist, und **dadurch, dass** der Signaturgenerator (204A) das vorgeschaltete neuronale Netz (204A) nach dem Training umfasst,
das System (200) ferner zum Erkennen einer Bedrohung in dieser IT-Infrastruktur (100) konfiguriert ist, durch Verwenden der Signatur (SG) einer Entität (E) zum Erkennen eines abnormalen Verhaltens der Entität (E).

## Claims

1. Method (300) for designing a signature generator (204A) for providing a signature (SG) of an entity (E) performing actions in a computing infrastructure (100), this signature (SG) being provided from a set of statistical characteristics (V) of dated actions of this entity (E) in the computing infrastructure (100), the method being computer-implemented and comprising:
- obtaining (309) a trainable machine (202) comprising at least:
• an upstream neural network (204A) for providing a signature (SG) of an entity (E) from a set of statistical characteristics (V) of dated actions of this entity (E) in a computing infrastructure (100), and
• a classifier (204B) for providing an entity prediction (E*) from the signature (SG) provided by the upstream neural network (204A);
- obtaining (306) training data comprising sets of statistical characteristics (V) of dated actions, each associated with an entity (E) having performed these actions in the computing infrastructure (100), the training data comprising a plurality of sets of statistical characteristics (V) for each entity (E);
- supervised training (310) of the trainable machine (202) based on the training data so that the trainable machine (202) correctly predicts the entities (E) associated with the sets of statistical characteristics (V) of the training data by using a first loss function (L_{ID}) representative of a distance between each entity prediction (E*) and the associated entity (E); and
- providing (314) the signature generator (204A) comprising the upstream neural network (204A) after training;
the method (300) being **characterized in that** the supervised training is further performed in such a way that the trainable machine (202) groups the signatures (SG) of each of the entities (E) associated with the sets of statistical characteristics (V) of the training data around a center associated with this entity (E) by using a second loss function (L_{C}) representative for each entity (E) of a distance between its signatures (SG) and the center associated with it,
the method further comprising detecting a threat in this computing infrastructure (100) by using the signature (SG) of an entity (E) to detect abnormal behavior of said entity (E).

2. Method according to claim 1, wherein the center is a barycenter, for example an isobarycenter, of the signatures (SG) of the entity (E) to which this center is associated.

3. Method according to claim 1 or 2, wherein the supervised training minimizes a total loss function (Lₜₒₜₐₗₑ) using the first loss function (L_{ID}) associated with the entity prediction and the second loss function (L_{C}) associated with signature (SG) clustering.

4. Method according to claim 3, wherein the total loss function (Lₜₒₜₐₗₑ) uses a linear combination of the first loss function and second loss function (L_{ID}, L_{C}).

5. Method according to claim 4, wherein the linear combination has a coefficient for at least one of the first loss function and second loss function (L_{ID}, L_{C}), this coefficient being a hyperparameter, and comprising:
- supervised training (310) of the trainable machine (202) from training data for several sets of hyperparameters;
- for each set of hyperparameters, analysis of the signatures obtained to produce a performance evaluation; and
- selection of hyperparameters giving the best performance evaluation.

6. Method according to any one of claims 1 to 5, wherein the trainable machine (202) comprises a global neural network (204) comprising N neural layers, the upstream neural network (204A) comprising the N - k first layers and the classifier (204B) comprising the k last layers, k being greater than or equal to one.

7. Method according to any one of claims 1 to 6, wherein the supervised training is further performed so that the trainable machine (202) performs one or more other tasks.

8. Method (500) according to any one of claims 1 to 7, wherein detecting a threat comprises:
- providing (506) at least one set of statistical characteristics (V₁... V_{K}) of dated actions of the entity (E) in the computing infrastructure (100) to the signature generator (204A);
- the signature generator (204A) providing (508) a signature (SG₁...SG_{K}) of the entity (E) for each set of statistical characteristics (V₁...V_{K});
- comparing (512) a reference data item (D*) from one or more of the signatures (SG₁...SG_{N}) provided by the signature generator (204A) with at least one activity data item (D); and
- detecting a potential threat in the computing infrastructure (100) by detecting (512) normal or abnormal behavior of the entity (E) from the comparison.

9. Computer program downloadable from a communication network and/or stored on a computer readable medium and/or executable by a processor, **characterized in that** it comprises instructions for executing the steps of a method according to any one of claims 1 to 8, when said program is executed on a computer.

10. System (200) for designing a signature generator (204A) for providing a signature (SG) of an entity (E) performing actions in a computing infrastructure (100) for detecting a threat in this computing infrastructure (100), this signature (SG) being provided from a set of statistical characteristics (V) of dated actions of this entity (E) in the computing infrastructure (100), comprising:
- a trainable machine (202) comprising at least:
• an upstream neural network (204A) for providing a signature (SG) of an entity (E) from a set of statistical characteristics (V) of dated actions of this entity (E) in a computing infrastructure (100), and
• a classifier (204B) for providing an entity prediction (E*) from the signature (SG) provided by the upstream neural network (204A);
- a training device (207) configured to perform supervised training of the trainable machine (202) based on training data comprising sets of statistical characteristics (V) of dated actions, each associated with an entity (E) having performed these actions in the computing infrastructure (100), the training data comprising a plurality of sets of statistical characteristics (V) for each entity (E), so that the trainable machine (202) correctly predicts the entities (E) associated with the sets of statistical characteristics (V) of the training data by using a first loss function (L_{ID}) representative of a distance between each entity prediction (E*) and the associated entity (E);
the system (200) being **characterized in that** the training device (207) is further designed to train the trainable machine (202) so that the trainable machine (202) groups the signatures (SG) of each of the entities (E) associated with the sets of statistical characteristics (V) of the training data around a center associated with that entity (E) by using a second loss function (L_{C}) representative for each entity (E) of a distance between its signatures (SG) and the center associated with it, and **in that** the signature generator (204A) comprises the upstream neural network (204A) after training,
the system (200) being further configured to detect a threat in this computing infrastructure (100) by using the signature (SG) of an entity (E) to detect abnormal behavior of said entity (E).
